Europäisches Patentamt

European Patent Office

Office européen des brevets

(19)

(11)  EP 1 096 827 B1

(12)  **FASCICULE DE BREVET EUROPEEN**

(45) Date de publication et mention
de la délivrance du brevet:
**05.03.2003  Bulletin 2003/10**

(51) Int Cl.⁷: **H04Q 11/04**

(21) Numéro de dépôt: **00402931.0**

(22) Date de dépôt: **24.10.2000**

(54) **Procédé de mise en conformité à un contrat de trafic d'un flux de paquets d'un réseau de transport de paquets à longueur variable**

Verfahren zur Überwachung eines Paketstroms in einem Paketnetz mit Paketen variabler Länge

Method for policing a packet flow in a packet network with variable-length packets

(84) Etats contractants désignés:
**AT BE CH CY DE DK ES FI FR GB GR IE IT LI LU
MC NL PT SE**

(30) Priorité:  **26.10.1999  FR 9913488**

(43) Date de publication de la demande:
**02.05.2001  Bulletin 2001/18**

(73) Titulaire: **Mitsubishi Electric Information
Technology Centre Europe B.V.
1101 AG Amsterdam Zuidoost (NL)**

(72) Inventeur: **Coudreuse, Jean-Pierre
35700 Rennes (FR)**

(74) Mandataire: **Maillet, Alain
SCP Le Guen & Maillet,
5, Place Newquay,
B.P. 70250
35802 Dinard Cedex (FR)**

(56) Documents cités:
**EP-A- 0 817 433        US-A- 5 668 797**

## Description

La présente invention concerne un procédé de mise en conformité à un contrat de trafic d'un flux de paquets d'un réseau de transport de paquets de longueur variable. Un tel procédé est utilisé dans un tel réseau pour contrôler le respect des contrats de trafic passés entre les utilisateurs et le réseau et ainsi assurer à ces mêmes usagers une garantie de performance.

On connaît déjà de tels procédés de remise en conformité du trafic de paquets, mais pour des réseaux de transport de paquets de longueur fixe, tels que les cellules dans les réseaux ATM ("Asynchronous Transfer Mode" = Mode de transfert asynchrone)

Les caractéristiques spécifiques des réseaux ATM qui ont permis de résoudre les différents problèmes liés à la garantie de performance sont les suivantes.

Les réseaux ATM transportent de cellules qui sont de longueur fixe ce qui rend prévisible l'impact réciproque des communications établies et permet donc de mettre en place des schémas de multiplexage contrôlables. Le contrat de trafic qui est négocié au moment de l'établissement de la communication définit au moins deux paramètres qui sont respectivement le temps minimal entre deux émissions de cellules $T$ (qui est l'inverse du débit crête encore appelé "Peak Cell Rate" ou "PCR") et la tolérance de gigue de temps de propagation $\tau$ (encore appelée "Cell Delay Variation" ou "CDV" = variation du débit de cellule) qui peut altérer le temps intercellule. Cette tolérance $\tau$ recouvre les variations de temps de propagation dues au multiplexage de cellules. Dans des contrats de trafic plus élaborés, elle rend également compte des irrégularités dues à une source émettant des cellules par rafales imprévisibles.

Les réseaux ATM sont généralement pourvus de moyens pour mettre en oeuvre un procédé de mise en conformité d'un flux de cellules au contrat de trafic précédemment mentionné ainsi qu'un procédé de remise en forme des flux individuels de cellules restaurant les caractéristiques originelles du flux perturbées de façon cumulative par la gigue de manière à les remettre en conformité avec le contrat de trafic ou simplement à réduire la gigue pour assurer une meilleure fluidité du réseau.

Par exemple, selon un procédé de mise en conformité d'un flux de cellules connu, le temps d'arrivée réel d'une cellule est comparé à son temps d'arrivée théorique, nommé par la suite *TAT* (Theoretical Arrival Time). S'il est inférieur à ce temps d'arrivée théorique d'une quantité supérieure à la tolérance de gigue $\tau$, la cellule est jugée trop en avance et est alors détruite. Sinon, elle est transmise et le temps d'arrivée théorique pour la prochaine cellule est mis à jour en additionnant, soit au temps d'arrivée réel, soit au temps d'arrivée théorique, selon le plus grand de ces deux temps, le temps minimal entre deux émissions de cellules.

On notera encore que selon ce procédé, si une cellule arrive plus tôt que son temps d'arrivée théorique, c'est l'heure théorique d'arrivée qui est utilisée pour la mise à jour. Si elle arrive plus tard que son temps d'arrivée théorique, c'est son temps réel d'arrivée qui est utilisé pour la mise à jour. Cette mise en oeuvre évite le phénomène de silence suivi de rafale. Les documents US5668797 et EP0817433 décrivent des procédés similaires.

Quant à un procédé connu de remise en forme des flux individuels de cellules, il peut être mis en oeuvre dans un contrôleur espaceur qui ne travaille plus sur les temps d'arrivée des cellules, mais sur les temps de retransmission desdites cellules.

Le procédé décrit ci-dessus qui établit un échéancier virtuel des temps théoriques d'arrivée des cellules et vérifie au moment de l'arrivée d'une cellule que son temps théorique d'arrivée est conforme, n'est efficace que parce qu'il est utilisé dans des réseaux effectuant le transport de paquets qui sont de longueur fixe, tels que les cellules des réseaux ATM, si bien que le temps utile consommé par l'émission de chaque cellule d'une quelconque file d'attente dudit réseau est fixe et peut être déterminé.

Cependant, cette taille fixe peut s'avérer très contraignante du point de vue de certaines applications, et en particulier d'applications à bas débit mais à forte contrainte de temps réel telles que les services de communication vocale. Par exemple, ceci a conduit à spécifier, en marge et en complément de la norme ATM, un mode de multiplexage et de commutation superposé (AAL2) insérant à l'intérieur des cellules d'une voie logique ATM ("virtual channel" ou VC) des "mini-cellules" de longueur variable et limitée à 48 (ou 64) octets (généralement à 48).

Il y a donc un besoin d'un procédé de mise en conformité à un contrat de trafic d'un flux de paquets qui soit applicable à un réseau de transport de mini-cellules et plus généralement de paquets de longueur variable. Un tel procédé apportera une solution au problème de la garantie de performance dans un tel réseau en permettant un contrôle du trafic à l'accès et une gestion des flux.

Le but de la présente invention est donc de répondre à ce besoin et de proposer un procédé de mise en conformité à un contrat de trafic d'un flux de paquets qui soit applicable à un réseau de transport de paquets de longueur variable.

A cet effet, un procédé de mise en conformité à un contrat de trafic selon la présente invention consiste, à chaque arrivée d'un paquet, à comparer le temps de cette arrivée à un temps théorique d'arrivée et, si ce temps d'arrivée est antérieur audit temps théorique de plus de la tolérance de gigue $\tau$ définie dans ledit contrat de trafic, détruire ledit paquet ou ne pas en tenir compte, sinon réémettre ledit paquet puis déterminer le temps théorique d'arrivée pour le prochain paquet. Ce procédé est caractérisé en ce que, pour déterminer ledit temps théorique d'arrivée pour le prochain paquet, il consiste à additionner, d'une part, un temps $t_i$ lié au présent paquet $i$ et qui est une fonction $f$ du temps théorique d'arrivée $TAT_i$ et du temps réel d'arrivée $\theta_i$, dudit paquet $i$ avec, d'autre part, un temps interpaquet $T_i$ qui est une fonction $g$ du temps négocié par unité de longueur $T$ défini dans ledit contrat de trafic et de la longueur $\lambda_i$ du paquet courant $i$ :

$$TAT_{i+l} = t_i + T_i = f(TAT_i, \theta_i) + g(T, \lambda_i)$$

Avantageusement, ledit temps interpaquet $T_i$ est égal au produit du temps négocié par unité de longueur $T$ par la longueur $\lambda_i$ du paquet courant $i$ exprimée dans cette même unité de longueur :

$$T_i = g(T, \lambda_i) = T.\lambda_i$$

Quant au temps lié au présent paquet $t_i$, il est avantageusement égal au plus grand des deux temps, le temps réel d'arrivée $\theta_i$, du paquet courant $i$, d'une part, et le temps théorique d'arrivée $TAT_i$ du paquet courant $i$, d'autre part :

$$t_i = f(TAT_i, \theta_i) = max(TAT_i, \theta_i)$$

Avantageusement, $t_i$ est égal à $\theta_i$ pour le premier paquet.

La présente invention concerne également un procédé de mise en conformité à un contrat de trafic d'un flux de paquets d'un réseau de transport de paquets à longueur variable, du type qui consiste, à chaque arrivée d'un paquet, à déterminer le temps théorique d'arrivée du présent paquet, à comparer le temps réel de cette arrivée audit temps théorique d'arrivée et, si ce temps d'arrivée en est antérieur de plus de la tolérance de gigue, détruire ledit paquet ou ne pas en tenir compte, sinon ré-émettre ledit paquet. Il consiste, dans ce cas, pour déterminer ledit temps théorique d'arrivée pour le présent paquet, à additionner , d'une part, un temps $t_{i-l}$ lié au précédent paquet conforme $i - l$ et qui est une fonction $f$ du temps théorique d'arrivée $TAT_{i-l}$ et du temps réel d'arrivée $\theta_{i-l}$ dudit paquet $i - l$ avec, d'autre part, un temps interpaquet $T_i$ qui est une fonction $g$ du temps négocié par unité de longueur $T$ défini dans ledit contrat de trafic et de la longueur $\lambda_i$ du paquet courant $i$ :

$$TAT_i = t_{i-l} + T_i = f(TAT_{i-l}, \theta_{i-l}) + g(T, \lambda_i)$$

Avantageusement, ledit temps inter-paquet $T_i$ est égal au produit du temps négocié par unité de longueur $T$ par la longueur $\lambda_i$ du paquet courant $i$ exprimée dans cette même unité :

$$T_i = g(T, \lambda_i) = T.\lambda_i$$

Quant au temps lié au paquet précédent conforme $i - l$, il est avantageusement égal au plus grand des deux temps : le temps réel d'arrivée $\theta_{i-l}$ dudit paquet précédent et son temps théorique d'arrivée $TAT_{i-l}$ :

$$t_{i-l} = f(TAT_{i-l}, \theta_{i-l}) = max(TAT_{i-l}, \theta_{i-l})$$

Avantageusement, $t_i$ est égal à $\theta_i$, pour le premier paquet.

Selon les deux procédés de la présente invention décrits ci-dessus, un paquet qui est jugé conforme est retransmis à son temps d'arrivée réel $\theta_i$.

Selon une variante de ces deux procédés, un paquet jugé conforme mais qui arrive à une temps $\theta_i$ antérieur à son temps théorique d'arrivée $TAT_i$ est retransmis à l'échéance du temps théorique d'arrivée lié audit paquet, alors notée $TRT_i$.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

    La Fig. 1 est un diagramme montrant les différentes étapes d'un procédé selon un premier mode de réalisation de la présente invention,

    La Fig. 2 est un diagramme des temps montrant le traitement de six paquets par un procédé selon un premier mode de réalisation de la présente invention,

    La Fig. 3 est un diagramme montrant les différentes étapes d'un procédé selon un second mode de réalisation de la présente invention,

    La Fig. 4 est un diagramme des temps montrant le traitement de six paquets par un procédé selon un second mode de réalisation de la présente invention.

La présente invention concerne un procédé de mise en conformité à un contrat de trafic d'un flux de paquets d'un réseau de transport de paquets de longueur variable. Le contrat de trafic qui est négocié au moment de l'établissement de la communication définit deux paramètres qui sont respectivement un temps négocié par unité de longueur $T$ (qui est par exemple l'inverse du débit crête octet de l'application, l'unité de longueur étant alors l'octet) et la tolérance de gigue de temps de propagation $\tau$ qui peut altérer le temps interpaquet.

La tolérance de gigue $\tau$ couvre la variabilité du temps de propagation des paquets dans un réseau à file d'attente. Selon le procédé de la présente invention, la variabilité de la longueur des paquets engendrés par la source est explicitement connue et prise en compte lors du calcul de l'échéancier virtuel. La nécessité d'une tolérance de rafale lorsqu'elle est introduite en ATM pour rendre compte du comportement d'une source qui segmente en cellules des paquets de données est donc supprimée.

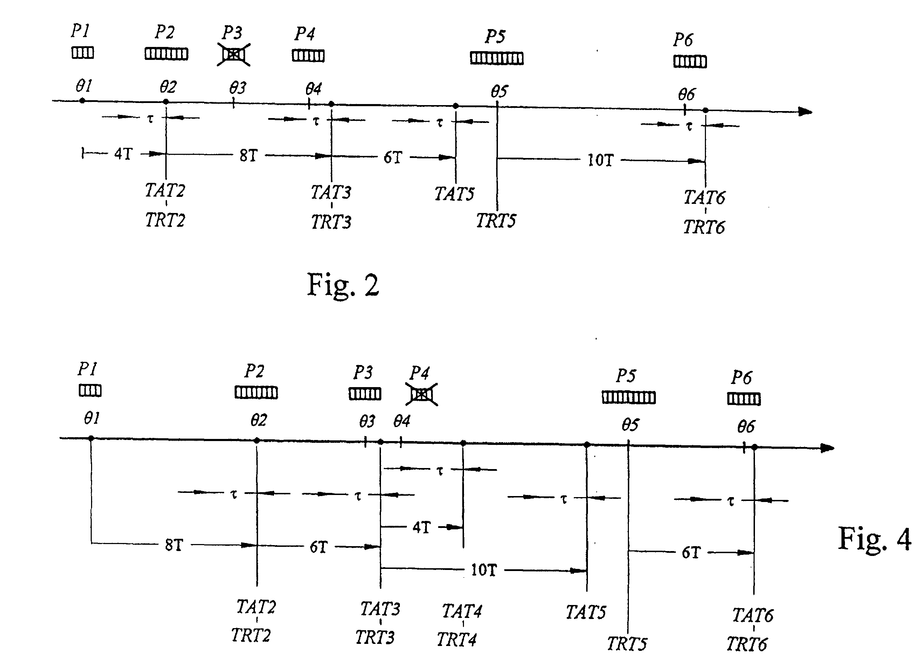

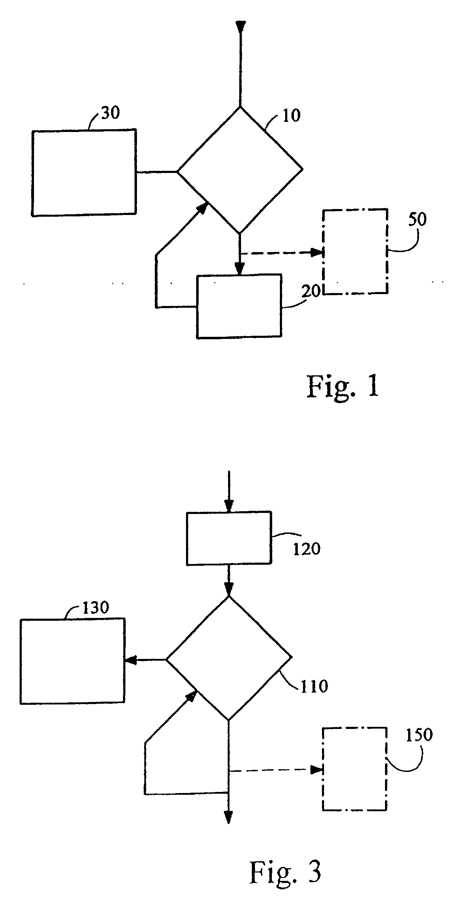

Comme cela est visible à la Fig. 1, à l'arrivée d'un paquet $i$, son temps d'arrivée $\theta_i$ est comparé, à une étape 10, à un temps d'arrivée théorique $TAT_i$ qui a été précédemment déterminé à une étape 20. Si ce temps d'arrivée réel $\theta_i$ est inférieur au temps théorique d'arrivée $TAT_i$ d'une quantité supérieure à la tolérance de gigue $\tau$, c'est-à-dire si la relation suivante est vérifiée :

$$\theta_i < TAT_i - \tau$$

alors le paquet $i$ est jugé comme étant arrivé trop en avance et il est détruit dans une étape 30. Sinon, il est immédiatement retransmis.

Le temps d'arrivée théorique $TAT_{i+1}$ pour le prochain paquet $i+1$ est mis à jour à l'étape 20. C'est le calcul du temps théorique d'arrivée $TAT_{i+1}$ du prochain paquet ou $TAT_i$ du paquet courant qui est caractéristique de la présente invention.

Selon un premier mode de réalisation, le temps théorique d'arrivée $TAT_{i+1}$ du paquet suivant $i+1$ est égal à un temps $t_i$ qui est lié au paquet courant $i$ et qui est une fonction $f$ du temps théorique d'arrivée $TAT_i$ du paquet courant $i$ et de son temps réel d'arrivée $\theta_i$, auquel est additionné un temps interpaquet $T_i$ qui est une fonction $g$ du temps négocié par unité de longueur $T$ défini dans le contrat de trafic et de la longueur $\lambda_i$ du paquet courant $i$, si bien que l'on peut écrire :

$$TAT_{i+1} = t_i + T_i = f(TAT_i, \theta_i) + g(T, \lambda_i)$$

Par exemple, le temps $t_i = f(TAT_i, \theta_i)$ est égal au plus grand des deux temps, le temps d'arrivée $\theta_i$ du paquet courant $i$, d'une part, et le temps théorique d'arrivée $TAT_i$ du paquet courant $i$, d'autre part. On a alors :

$$t_i = f(TAT_i, \theta_i) = max(TAT_i, \theta_i)$$

De plus, le temps interpaquet $T_i$ est par exemple égal au produit du temps négocié par unité de longueur $T$ défini dans le contrat de trafic par la longueur $\lambda_i$ du paquet courant $i$ exprimée dans cette même unité de longueur. On a alors :

$$T_i = g(T, \lambda_i) = T.\lambda_i$$

Dans ces deux cas cumulés, on peut donc écrire :

$$TAT_{i+1} = max(TAT_i, \theta_i) + T.\lambda_i$$

$TAT_i$ est égal à $\theta_i$ à l'arrivée du premier paquet.

On notera que le temps négocié $T$ qui est défini dans le contrat de trafic correspond à un délai fictif minimum par unité de longueur, par exemple l'octet.

On a représenté à la Fig. 2 un diagramme des temps montrant la mise en oeuvre du procédé qui vient d'être décrit dans le cas de six paquets $P_1$ à $P_6$ de longueurs $\lambda_1$ à $\lambda_6$ respectivement égales à 4, 8, 4, 6, 10 et 6 unités.

Le premier paquet $P_1$ arrive au temps $\theta_1$. Il est immédiatement retransmis et son temps d'arrivée $\theta_1$ sert de référence pour le calcul du temps théorique d'arrivée du paquet suivant (ce qui revient à écrire que $TAT_1 = \theta_1$). Sa longueur étant de 4, le temps théorique d'arrivée du prochain paquet $P_2$ est alors égal à :

$$TAT_2 = \theta_1 + 4T$$

Le paquet $P_2$ arrive au temps $\theta_2$ correspondant à son temps théorique d'arrivée $TAT_2$. Il est donc immédiatement retransmis. Sa longueur étant de 8, le temps d'arrivée théorique $TAT_3$ est alors calculé :

$$TAT_3 = \theta_2 + 8T$$

Le paquet $P_3$ arrive au temps $\theta_3$ qui est antérieur au temps théorique d'arrivée $TAT_3$ auquel est soustraite la tolérance de gigue $\tau$. Il est donc détruit. $TAT_3$ reste le temps théorique d'arrivée de référence pour le paquet suivant, le paquet $P_4$ dans l'exemple de la Fig. 2.

Le paquet $P_4$ arrive au temps $\theta_4$ qui est antérieur au temps théorique d'arrivée $TAT_3$ mais qui se trouve à l'intérieur de l'intervalle de temps défini par la tolérance de gigue $\tau$. Il est donc retransmis aussitôt. Sa longueur étant de 6, le temps théorique d'arrivée $TAT_5$ du prochain paquet est calculé :

$$TAT_5 = max(TAT_3, \theta_4) + 6T = TAT_3 + 6T$$

Le paquet $P_5$ arrive au temps $\theta_5$ qui est postérieur au temps théorique d'arrivée $TAT_5$. Il est donc retransmis aussitôt. Sa longueur étant de 10, le temps théorique d'arrivée $TRT_6$ du prochain paquet est calculé :

$$TAT_6 = max(TAT_5, \theta_5) + 10T = \theta_5 + 10T$$

Le processus se poursuit par l'arrivée du paquet $P_6$.

On a représenté à la Fig. 3 un autre mode de réalisation de la présente invention.

Selon ce mode, à une étape 120 mise en oeuvre au temps d'arrivée $\theta_i$ d'un paquet $i$, on détermine le temps théorique d'arrivée $TAT_i$ du paquet courant $i$ en additionnant à un temps $t_{i-l}$ qui est lié au précédent paquet conforme $i - l$ et qui est une fonction $f$ du temps théorique d'arrivée $TAT_{i-l}$ du paquet précédent $i - l$ et de son temps d'arrivée réel $\theta_{i-l}$ un temps interpaquet $T_l$ qui est une fonction $g$ du temps négocié par unité de longueur $T$ défini dans ledit contrat de trafic et de la longueur $\lambda_i$ du paquet courant $i$ :

$$TAT_i = t_{i-l} + T_l = f(TAT_{i-l}, \theta_{i-l}) + g(T, \lambda_i)$$

A l'instar du mode de réalisation précédent, le temps $t_{i-l} = f(TAT_{i-l}, \theta_{i-l})$ est égal au plus grand des deux temps, le temps d'arrivée $\theta_{i-l}$ du paquet précédent conforme $i-l$, d'une part, et le temps théorique d'arrivée $TAT_{i-l}$ du paquet précédent conforme $i-l$, d'autre part. On a alors :

$$t_{i-l} = f(TAT_{i-l}, \theta_{i-l}) = max(TAT_{i-l}, \theta_{i-l})$$

Egalement, le temps interpaquet $T_i$ est avantageusement égal au produit du temps négocié $T$ par la longueur $\lambda_i$ du paquet courant $i$ exprimée dans la même unité

$$T_i = g(T, \lambda_i) = T . \lambda_i$$

On peut donc écrire :

$$TAT_i = max(TAT_{i-l}, \theta_{i-l}) + T.\lambda_i$$

A une étape 110, le temps d'arrivée réel $\theta_i$ du paquet courant $i$ est comparé au temps théorique d'arrivée $TAT_i$ qui vient d'être calculé. S'il est inférieur à ce temps théorique $TAT_i$ de plus de la tolérance de gigue $\tau$, le paquet $i$ est jugé non conforme et est donc détruit à une étape 130. Sinon, il est retransmis.

On a représenté à la Fig. 4 un diagramme des temps montrant la mise en oeuvre du procédé qui vient d'être décrit dans le cas de six paquets $P_1$ à $P_6$ de longueurs $\lambda_l$ à $\lambda_6$ respectivement égales à 4, 8, 6, 4, 10 et 6 unités arbitraires.

Le premier paquet $P_1$ arrive au temps $\theta_l$ et il est alors retransmis. Le temps théorique $TAT_l$ est égal à ce temps $\theta_l$.

Le paquet $P_2$, de longueur 8, arrive au temps $\theta_2$ et son temps théorique d'arrivée $TAT_2$ est déterminé comme étant égal à :

$$TAT_2 = TAT_l + 8T$$

Comme on peut le constater sur le diagramme de la Fig. 4, le temps $TAT_2$ correspond au temps réel d'arrivée du paquet $P_2$. Le paquet $P_2$ est donc retransmis.

Le paquet $P_3$, de longueur 6, arrive au temps $\theta_3$. Le temps théorique d'arrivée $TAT_3$ est déterminé :

$$TAT_3 = max(TAT_2, \theta_2) + 6T = TAT_2 + 6T$$

Le temps d'arrivée réel $\theta_3$ du paquet $P_3$ est antérieur à ce temps théorique $TAT_3$ mais est compris dans l'intervalle défini par la tolérance de gigue $\tau$. Le paquet $P_3$ est donc retransmis.

Le paquet $P_4$, de longueur 4, arrive au temps $\theta_4$. Le temps théorique d'arrivée $TAT_4$ est déterminé

$$TAT_4 = max(TAT_3, \theta_3) + 4T = TAT_3 + 4T$$

Le temps d'arrivée réel $\theta_4$ du paquet $P_4$ est antérieur à ce temps théorique $TAT_4$ auquel on a soustrait la tolérance de gigue $\tau$. Le paquet $P_4$ qui n'est donc pas conforme est détruit.

Le temps de référence pour le calcul du temps d'arrivée du prochain paquet reste donc le temps $t_3 = max(TAT_3, \theta_3)$.

Le paquet $P_5$, de longueur 10, arrive au temps $\theta_5$. Le temps théorique d'arrivée $TAT_5$ est déterminé par la relation suivante :

$$TAT_5 = max(TAT_3, \theta_3) + 10T = TAT_3 + 10T$$

Le temps d'arrivée réel $\theta_5$ du paquet $P_5$ est postérieur à ce temps théorique $TAT_5$ si bien que le paquet $P_5$ est retransmis.

Le processus se poursuit par l'arrivée du paquet $P_6$, de longueur 6, au temps $\theta_6$. Le temps théorique d'arrivée de ce paquet devient égal à :

$$TAT_6 = max(TAT_5, \theta_5) + 6T = \theta_5 + 6T$$

Dans les deux modes de réalisation précédents, un paquet $i$ déterminé comme étant conforme par l'étape de comparaison correspondante 10 ou 110 est retransmis à son temps réel d'arrivée $\theta_i$.

On notera que, selon une variante de ces deux modes de réalisation, un paquet, au lieu d'être retransmis immédiatement après l'étape de comparaison 10 ou 110 pourrait n'être retransmis (aux étapes 50 ou 150 respectivement représentées en pointillés aux Figs. 1 et 3) qu'au temps d'arrivée théorique $TAT_i$, s'il est supérieur au temps réel d'arrivée $\theta_i$. On parle alors de temps théorique de retransmission $TRT_i$ ("Theoretical Retransmission Time").

Ainsi, par exemple, selon le premier mode de

**EP 1 096 827 B1**

réalisation, à l'étape 10, le temps d'arrivée $\theta_i$ du paquet courant $i$ est comparé au temps théorique d'arrivée $TAT_i$ qui a été précédemment déterminé à l'étape 20 du paquet jugé conforme précédent. S'il lui est antérieur de plus de la tolérance de gigue $\tau$, le paquet est jugé non conforme et est détruit à l'étape 30. Sinon, le paquet est jugé conforme et est retransmis dans une étape 50 à l'échéance $TRT_i = f(TAT_i, \theta_i)$, par exemple égale à $max(TAT_i, \theta_i)$.

Le temps théorique d'arrivée du paquet suivant est mis à jour dans l'étape 20

$$TAT_{i+l} = f(TAT_i, \theta_i) + g(T, \lambda_i) = TRT_i + g(T,\lambda_i)$$

Dans ce cas, comme cela est visible à la Fig. 2, les paquets $P_2$ à $P_6$ sont respectivement retransmis aux temps $TRT_2$ à $TRT_6$ qui sont identiques aux temps $TAT_2$ à $TAT_6$ à l'exception de $TRT_5$ qui est égal à $\theta_5$.

Selon le second mode de réalisation, à l'étape 120 mise en oeuvre à chaque instant d'arrivée $\theta_i$ d'une cellule $i$, le temps théorique d'arrivée $TAT_i$ dudit paquet est calculé selon la relation suivante :

$$TAT_i = max(TAT_{i-l}, \theta_{i-l}) + g(T, \lambda_i)$$

Le temps d'arrivée $\theta_i$ du paquet courant i est ensuite comparé au temps théorique d'arrivée $TAT_i$ qui vient d'être déterminé à l'étape précédente 120. S'il est inférieur à ce temps théorique $TAT_i$ de plus de la tolérance de gigue $\tau$, le paquet est jugé non conforme et est détruit à l'étape 130. Sinon, le paquet est jugé conforme et est retransmis dans une étape 150 à l'échéance $TRT_i = f(TAT_i, \theta_i)$, par exemple égale à $max(TAT_i, \theta_i)$.

Dans ce cas, comme cela est visible à la Fig. 4, les paquets $P_2$ à $P_6$ sont respectivement retransmis aux temps $TRT_2$ à $TRT_6$ qui sont identiques aux temps $TAT_2$ à $TAT_6$ à l'exception de $TRT_5$ qui est égal à $\theta_5$.

Un procédé selon la présente invention peut être mis en oeuvre à une interface d'accès à un réseau. Il peut l'être encore dans des mécanismes de commutation du réseau qui intègrent le calcul des temps théoriques de retransmission pour réordonner les paquets appartenant à différentes voies logiques au moment de leur multiplexage, voire pour les retransmettre aux instants théoriques calculés.

On notera que les paquets qui sont traités par un procédé selon la présente invention peuvent appartenir à une unique voie logique mais aussi à plusieurs voies logiques.

Les paquets peuvent être à longueur variable sur une voie logique. L'information de longueur de paquet $\lambda_i$ dont a besoin le procédé de l'invention pour être mis en oeuvre est alors généralement portée par les paquets eux-mêmes qui comportent, pour ce faire, par exemple un champ d'indication de longueur. Elle peut être déduite du procédé de délimitation des paquets lors de leur réception.

Les paquets peuvent être à longueur constante sur chaque voie logique, dans le cas de plusieurs voies logiques. Cette longueur est par exemple négociée au moment de l'établissement de la connexion et est transmise au système mettant en oeuvre le procédé de l'invention au même titre que les autres paramètres de contrôle, à savoir le temps négocié $T$ et la tolérance de gigue $\tau$.

Un procédé selon la présente invention autorise une meilleure optimisation des ressources dans la mesure où ce sont les longueurs réelles des paquets qui sont prises en compte dans les mécanismes d'admission et de contrôle et non leurs valeurs maximales autorisées. L'aléa introduit par exemple par la tolérance de rafale en ATM ("Maximum burst size" représentée par $\tau_{MBS}$) est donc supprimé par le procédé.

On notera que, selon le dernier mode de réalisation de la présente invention qui espace effectivement les paquets selon leur temps théorique d'arrivée, le temps théorique de retransmission $TRT_i$ est déterminé de manière additive à partir du temps théorique de retransmission $TRT_{i-l}$ du paquet précédent. Ce mode de réalisation conserve donc l'ordre des cellules sur le lien.

Il en est de même des autres modes de réalisation puisque la retransmission d'un paquet, si elle a lieu (si le paquet est conforme), est concomitante de son arrivée.

On a pu remarquer que l'utilisation de la fonction d'espacement dans le second mode de réalisation de la présente invention attribue implicitement une priorité temporelle relative aux paquets courts sur les paquets longs issus de voies logiques différentes. Ceci est dû au fait que chaque paquet est retardé d'un temps proportionnel à sa longueur : un paquet long subit un retard effectif plus important qu'un paquet court. Ainsi, les paquets portant des informations vocales, *a priori* beaucoup plus courts, seront servis en priorité sur les paquets de données plus longs. Il en serait de même des paquets portant des informations de service ou de contrôle généralement très courts et qui seraient donc servis en priorité sur ceux qui portent des informations usager.

**Revendications**

1.  Procédé de mise en conformité à un contrat de trafic d'un flux de paquets d'un réseau de transport de paquets à longueur variable, ledit procédé consistant à chaque arrivée d'un paquet, à comparer le temps de cette arrivée à un temps théorique d'arrivée et, si ce temps d'arrivée est antérieur audit temps théorique de plus de la tolérance de gigue définie dans ledit contrat, détruire ledit paquet ou ne pas en tenir compte, sinon réémettre ledit paquet puis déterminer le temps théorique d'arrivée pour le prochain paquet, **caractérisé en ce que**, pour déterminer ledit temps théorique d'arrivée pour le prochain paquet, il consiste à additionner un temps $t_i$ qui lié au présent paquet $i$ et qui est une fonction $f$ du temps théorique d'arrivée $TAT_i$ et du temps réel d'arrivée $\theta_i$ dudit paquet $i$ à un temps interpaquet $T_i$ qui est une fonction $g$ du temps négocié par unité de longueur $T$ défini dans ledit contrat de trafic et de la longueur $\lambda_i$ du paquet courant $i$ :

$$TAT_{i+I} = t_i + T_i = f(TAT_i, \theta_i) + g(T, \lambda_i)$$

2. Procédé de mise en conformité selon la revendication 1, **caractérisé en ce que** ledit temps interpaquet $T_i$ est égal au produit du temps négocié $T$ défini dans ledit contrat de trafic par la longueur $\lambda_i$ du paquet courant $i$ exprimée dans la même unité :

$$T_i = T . \lambda_i$$

3. Procédé de mise en conformité selon la revendication 1, **caractérisé en ce que** ledit temps $t_i$ est égal au plus grand des deux temps, le temps d'arrivée $\theta_i$ du paquet courant $i$, d'une part, et le temps théorique d'arrivée $TAT_i$ du paquet courant $i$, d'autre part :

$$t_i = max(\theta_i, TAT_i)$$

4. Procédé de mise en conformité selon la revendication 3, **caractérisé en ce que** ledit temps $t_i$ est égal au temps réel d'arrivée $\theta_i$ pour le premier paquet.

5. Procédé de mise en conformité à un contrat de trafic d'un flux de paquets d'un réseau de transport de paquets à longueur variable, ledit procédé consistant à chaque arrivée d'un paquet, à déterminer le temps théorique d'arrivée du présent paquet, à comparer le temps de cette arrivée audit temps théorique d'arrivée et, si ce temps d'arrivée en est antérieur de la tolérance de gigue $\tau$ définie dans ledit contrat de trafic, détruire ledit paquet ou ne pas en tenir compte, sinon réémettre ledit paquet, **caractérisé en ce que**, pour déterminer ledit temps théorique d'arrivée pour le présent paquet, il consiste à additionner, d'une part, un temps $t_{i-I}$ qui est lié au précédent paquet conforme $i - I$ et qui est une fonction $f$ du temps théorique d'arrivée $TAT_{i-I}$ et du temps réel d'arrivée $\theta_{i-I}$ dudit paquet $i - I$ avec, d'autre part, un temps interpaquet $T_i$ qui est une fonction $g$, d'une part, d'un temps négocié par unité de longueur $T$ défini dans ledit contrat de trafic et, d'autre part, de la longueur $\lambda_i$ du paquet courant $i$ :

$$TAT_i = t_{i-I} + T_i = f(TAT_{i-I}, \theta_{i-I}) + g(T, \lambda_i)$$

6. Procédé de mise en conformité selon la revendication 5, **caractérisé en ce que** ledit temps interpaquet $T_i$ est égal au produit du temps négocié $T$ défini dans ledit contrat de trafic par la longueur $\lambda_i$ du paquet courant $i$ exprimée dans la même unité :

$$T_i = T . \lambda_i$$

7. Procédé de mise en conformité selon la revendication 5, **caractérisé en ce que** ledit temps $t_{i-I}$ qui est lié au précédent paquet conforme $i - I$ et qui est une fonction $f$ de son temps théorique d'arrivée $TAT_{i-I}$ et de son temps réel d'arrivée $\theta_{i-I}$ est égal au plus grand des deux temps, le temps d'arrivée $\theta_{i-I}$ du précédent paquet conforme $i - I$, d'une part, et le temps théorique d'arrivée $TAT_{i-I}$ du précédent paquet conforme $i - I$, d'autre part :

$$t_{i-I} = max(\theta_{i-I}, TAT_{i-I})$$

8. Procédé de mise en conformité selon la revendication 7, **caractérisé en ce que**, pour le premier paquet, il consiste à rendre le temps théorique d'arrivée $TAT_i$ du paquet courant $i$ égal au temps réel d'arrivée $\theta_i$.

9. Procédé de mise en conformité selon une des revendications précédentes, **caractérisé en ce qu'**un paquet jugé conforme est retransmis à son temps d'arrivée réel $\theta_i$.

10. Procédé de mise en conformité selon une des revendications 1 à 8, **caractérisé en ce qu'**un paquet jugé conforme mais qui arrive à un temps $\theta_i$ antérieur à son temps théorique d'arrivée $TAT_i$ est retransmis à l'échéance du temps théorique $TAT_i$ lié audit paquet.

## Patentansprüche

1. Verfahren zur Überwachung eines Paketstroms in einem Paketnetz mit Paketen variabler Länge, wobei das Verfahren darin besteht, bei jeder Ankunft eines Pakets die Zeit dieser Ankunft mit einer theoretischen Ankunftszeit zu vergleichen und, wenn die Ankunftszeit um mehr als die im Vertrag festgelegte Jittertoleranz vor der theoretischen Zeit liegt, das Paket zu zerstören oder es nicht zu berücksichtigen, anderenfalls das Paket weiterzusenden und dann die theoretische Ankunftszeit für das nächste Paket zu berechnen, **dadurch gekennzeichnet, dass** zum Bestimmen der theoretischen Ankunftszeit des nächsten Pakets das Verfahren darin besteht, eine Zeit ti, die an das aktuelle Paket i gebunden ist und eine Funktion $f$ der theoretischen An-

kunftszeit $TAT_i$ und der tatsächlichen Ankunftszeit θi des Pakets i ist, zur Zeit $T_i$ zwischen Paketen, die eine Funktion g der vertraglichen Zeit pro Einheit mit der Länge T und der Länge λ1 des aktuellen Pakets i ist, zu addieren:

$$TAT_{i+l} = t_i + T_i = f(TAT_i, θ_i) + g(T, λ_i)$$

2. Verfahren zur Überwachung nach Anspruch 1, **dadurch gekennzeichnet, dass** die Zeit zwischen Paketen $T_i$ gleich dem Produkt aus verhandelter Zeit T des Verkehrsvertrags und der Länge λ₁ des aktuellen Pakets i ausgedrückt in der gleichen Einheit ist:

$$T_i = T . λ_i$$

3. Verfahren zur Überwachung nach Anspruch 1, **durch gekennzeichnet, dass** die Zeit ti gleich der größeren der zwei Zeiten ist, nämlich der Ankunftszeit $θ_i$ des aktuellen Pakets i einerseits und der theoretischen Ankunftszeit $TAT_i$ des aktuellen Pakets i andererseits:

$$t_i = max (θ_i, TAT_i)$$

4. Verfahren zur Überwachung nach Anspruch 3, **durch gekennzeichnet, dass** die Zeit $t_i$ gleich der tatsächlichen Ankunftszeit $θ_i$ für das erste Paket ist.

5. Verfahren zur Überwachung eines Paketstroms eines Paketnetzes mit Paketen variabler Länge, wobei das Verfahren bei jeder Ankunft eines Pakets darin besteht, die theoretische Ankunftszeit des aktuellen Pakets zu bestimmen, die Zeit dieser Ankunft mit der theoretischen Ankunftszeit zu vergleichen und, wenn die Ankunftszeit vor der vertraglich festgelegten Jittertoleranz λ liegt, das Paket zu zerstören oder es nicht zu berücksichtigen, anderenfalls das Paket weiterzusenden, **dadurch gekennzeichnet, dass** zum Bestimmen der theoretischen Ankunftszeit des aktuellen Pakets das Verfahren darin besteht, einerseits eine Zeit $t_{i-1}$, die an das vorhergehende konforme Paket i-l gebunden ist und eine Funktion *f* der theoretischen Ankunftszeit TATi-1 und der tatsächlichen Ankunftszeit $θ_{i-1}$ des Pakets i-l ist, und andererseits eine Zeit zwischen Paketen $T_i$, die einerseits eine Funktion g der pro vertraglicher Längeneinheit T verhandelten Zeit und andererseits der Länge λ₁ des aktuellen Pakets i ist, zu addieren:

$$TAT_i = t_{i-l} + T_i = f(TAT_{i-l}, θ_{i-l}) + g(T, λ_i)$$

6. Verfahren zur Überwachung nach Anspruch 5, **dadurch gekennzeichnet, dass** die Zeit zwischen Paketen $T_i$ gleich dem Produkt der vertraglichen Zeit T und der Länge $λ_i$ des aktuellen Pakets i ausgedrückt in der gleichen Einheit ist:

$$T_i = T . λ_i$$

7. Verfahren zur Überwachung nach Anspruch 5, **dadurch gekennzeichnet, dass** diese Zeit $t_{i-1}$ die an das vorhergehende konforme Paket i-l gebunden ist und eine Funktion f seiner theoretischen Ankunftszeit $TAT_{i-1}$ und seiner tatsächlichen Ankunftszeit θ-₁, gleich der größeren der zwei Zeiten ist, nämlich der Ankunftszeit θi-₁ des vorhergehenden konformen Pakets i-l einerseits und der theoretischen Ankunftszeit $TAT_{i-1}$ des vorhergehenden konformen Pakets i-l andererseits:

$$t_{i-l} = max(θ_{i-l}, TAT_{i-l})$$

8. Verfahren zur Überwachung nach Anspruch 7, **dadurch gekennzeichnet, dass** es für das erste Paket darin besteht, die theoretische Ankunftszeit $TAT_i$ des aktuellen Pakets i gleich der tatsächlichen Ankunftszeit $θ_i$ zu machen.

9. Verfahren zur Überwachung nach einem der vorhergehenden Ansprüche, **dadurch gekennzeichnet, dass** ein als konform betrachtetes Paket bei seiner tatsächlichen Ankunftszeit $θ_i$ weiterübertragen wird.

10. Verfahren zur Überwachung nach einem der Ansprüche 1 bis 8, **dadurch gekennzeichnet, dass** ein als konform betrachtetes Paket, das mit einer Zeit $θ_i$ vor seiner theoretischen Ankunftszeit $TAT_i$ ankommt, nach Ablaufen der theoretischen Zeit TAT_i an dieses Paket gebunden weiterübertragen wird.

## Claims

1. Method of putting a flow of packets of a network for transporting packets of variable length into conformity with a traffic contract, the said method consisting, at each arrival of a packet, of comparing the time of this arrival with a theoretical arrival time and, if this arrival time is earlier than the said theoretical time by more than the jitter tolerance defined in the said contract, destroying the said packet or not taking it into account, otherwise retransmitting the said packet and then determining the theoretical arrival time for the next packet, **characterised in that**, in order to determine the said theoretical arrival time for the next packet, it consists of adding a time $t_i$ related to the present packet $i$ and which is a function $f$ of the theoretical arrival time $TAT_i$ and of the actual arrival time $\theta_i$ of the said packet $i$ to an interpacket time $T_i$ which is a function $g$ of the negotiated time per unit length $T$ defined in the said traffic contract and of the length $\lambda_i$ of the current packet $i$:

$$TAT_{i+1} = t_i + T_i = f(TAT_i, \theta_i) + g(T, \lambda_i)$$

2. Method of putting into conformity according to Claim 1, **characterised in that** the said interpacket time $T_i$ is equal to the product of the negotiated time $T$ defined in the said traffic contract and the length $\lambda_i$ of the current packet $i$ expressed in the same unit:

$$T_i = T \cdot \lambda_i$$

3. Method of putting into conformity according to Claim 1, **characterised in that** the said time $t_i$ is equal to the greater of the two times, the arrival time $\theta_i$ of the current packet $i$, on the one hand, and the theoretical arrival time $TAT_i$ of the current packet $i$, on the other hand:

$$t_i = max(\theta_i, TRT_i)$$

4. Method of putting into conformity according to Claim 3, **characterised in that** the said time $t_i$ is equal to the actual arrival time $\theta_i$ for the first packet.

5. Method of putting a flow of packets of a network for transporting packets of variable length into conformity with a traffic contract, the said method consisting, at each arrival of a packet, of determining the theoretical arrival time of the present packet, of comparing the time of this arrival with the said theoretical arrival time and, if this arrival time is earlier than the said theoretical time by the jitter tolerance $\tau$ defined in the said traffic contract, destroying the said packet or not taking it into account, otherwise retransmitting the said packet, **characterised in that**, in order to determine the said theoretical arrival time for the present packet, it consists of adding, on the one hand, a time $t_{i-1}$ related to the previous conforming packet $i - 1$ and which is a function $f$ of the theoretical arrival time $TAT_{i-1}$ and of the actual arrival time $\theta_{i-1}$ of the said packet $i - 1$ to, on the other hand, an interpacket time $T_i$ which is a function $g$, on the one hand, of a negotiated time per unit length $T$ defined in the said traffic contract and, on the other hand, of the length $\lambda_i$ of the current packet $i$:

$$TAT_i = t_{i-1} + T_i = f(TAT_{i-1}, \theta_{i-1}) + g(T, \lambda_i)$$

6. Method of putting into conformity according to Claim 5, **characterised in that** the said interpacket time $T_i$ is equal to the product of the negotiated time $T$ defined in the said traffic contract and the length $\lambda_i$ of the current packet $i$ expressed in the same unit:

$$T_i = T \cdot \lambda_i$$

7. Method of putting into conformity according to Claim 5, **characterised in that** the said time $t_{i-1}$ which is related to the previous conforming packet $i - 1$ and which is a function $f$ of its theoretical arrival time $TAT_{i-1}$ and of its actual arrival time $\theta_{i-1}$ is equal to the greater of the two times, the arrival time $\theta_{i-1}$ of the previous conforming packet $i - 1$, on the one hand, and the theoretical arrival time $TAT_{i-1}$ of the previous conforming packet $i - 1$, on the other hand:

$$t_{i-1} = max(\theta_{i-1}, TAT_{i-1})$$

8. Method of putting into conformity according to Claim 7, **characterised in that**, for the first packet, it consists of making the theoretical arrival time $TAT_i$ of the current packet $i$ equal to the actual arrival time $\theta_i$.

9. Method of putting into conformity according to one of the previous claims, **characterised in that** a packet deemed conforming is retransmitted at its actual arrival time $\theta_i$.

10. Method of putting into conformity according to one of Claims 1 to 8, **characterised in that** a packet deemed conforming but arriving at a time $\theta_i$ earlier than its theoretical arrival time $TAT_i$ is retransmitted at the expiry of the theoretical time $TAT_i$ related to the said packet.

EP 1 096 827 B1

P1   P2   P3   P4   P5   P6

θ1   θ2   θ3   θ4   θ5   θ6

τ   τ   τ   τ

4T   8T   6T   10T

TAT2   TAT3   TAT5   TAT6
TRT2   TRT3   TRT5   TRT6

## Fig. 2

P1   P2   P3   P4   P5   P6

θ1   θ2   θ3   θ4   θ5   θ6

τ   τ   τ   τ   τ

8T   6T   4T   6T

10T

TAT2   TAT3   TAT4   TAT5   TAT6
TRT2   TRT3   TRT4   TRT5   TRT6

## Fig. 4

Fig. 1

Fig. 3